# FASCICULE DE BREVET EUROPEEN

(11) **EP 3 921 466 B1**
(45) Date de publication et mention de la délivrance du brevet: **03.04.2024**
(21) Numéro de dépôt: 20706566.5
(22) Date de dépôt: 14.01.2020
(51) Int. Cl.: D07B 1/06, B60C 9/20

(54) **CÂBLE MULTITORONS DE STRUCTURE 1XN À HAUTE ÉNERGIE À RUPTURE**
MEHRADRIGES KABEL MIT HOHER BRUCHENERGIE UND MIT 1XN-STRUKTUR
HIGH ENERGY TO BREAKAGE MULTI-STRAND CABLE WITH 1XN STRUCTURE

(30) Priorité: 05.02.2019 FR 1901137
(43) Date de publication de la demande: 15.12.2021
(73) Titulaire: COMPAGNIE GENERALE DES ETABLISSEMENTS MICHELIN, 63000 Clermont-Ferrand (FR)
(72) Inventeur: CHEVALLEY, Marianna, 63040 CLERMONT-FERRAND CEDEX 9 (FR); BARBAT, Romain, 63040 CLERMONT-FERRAND CEDEX 9 (FR); LAURENT, Stéphane, 63040 CLERMONT-FERRAND CEDEX 9 (FR); PINAUT, Rémi, 63040 CLERMONT-FERRAND CEDEX 9 (FR)
(74) Mandataire: M.F.P. Michelin
(86) Numéro de dépôt international: PCT/FR2020/050042
(87) Numéro de publication internationale: WO 2020/161404

(56) Documents cités:
- WO-A1-2011/134900
- WO-A1-2016/131862

## Description

L'invention concerne des câbles et un pneumatique comprenant ces câbles.

On connait de l'état de la technique, notamment du document WO2016/131862 un pneumatique pour véhicule de génie civil à armature de carcasse radiale comprenant une bande de roulement, deux bourrelets inextensibles, deux flancs reliant les bourrelets à la bande de roulement et une armature de sommet, disposée circonférentiellement entre l'armature de carcasse et la bande de roulement. Cette armature de sommet comprend plusieurs nappes renforcées par des éléments de renforts tels que des câbles métalliques, les câbles d'une nappe étant noyés dans une matrice élastomérique de la nappe.

L'armature de sommet comprend une armature de travail, une armature de protection et éventuellement d'autres armatures, par exemple une armature de frettage.

L'armature de protection comprend une ou plusieurs nappes de protection comprenant plusieurs éléments filaires de renfort de protection. Chaque élément filaire de renfort de protection est un câble présentant une structure 1xN. Le câble comprend une unique couche de N=4 torons enroulés en hélice à un pas p3=20 mm. Chaque toron comprend, d'une part, une couche interne de M=3 fils internes enroulés en hélice à un pas p1 =6,7 mm et une couche externe de P=8 fils externes enroulés en hélice autour de la couche interne à un pas p2=10 mm. Chaque fils interne et externe présente un diamètre égal à 0,35 mm et une résistance mécanique égale à 2765 MPa.

D'une part, lors du passage du pneumatique sur des obstacles, par exemple sous la forme de cailloux, ces obstacles risquent de perforer le pneumatique jusqu'à atteindre l'armature de sommet. Ces perforations permettent l'entrée d'agents corrosifs dans l'armature de sommet du pneumatique et en réduisent la durée de vie.

D'autre part, on a observé que les câbles des nappes de protection peuvent présenter des ruptures consécutives à des déformations et des efforts relativement importants exercés sur le câble, notamment lors du passage du pneumatique sur des obstacles.

L'invention a pour but un câble permettant de réduire, voire de supprimer, le nombre de rupture et le nombre de perforation.

A cet effet l'invention a pour objet un câble présentant une structure 1xN comprenant une unique couche de N torons enroulés en hélice, chaque toron étant à deux couches de fils métalliques et comprenant :
- une couche interne constituée de M≥1 fil(s) métallique(s) interne(s) de diamètre D1,
- une couche externe constituée de P>1 fils métalliques externes de diamètre D2 enroulés autour de la couche interne.
Le câble selon l'invention présente un allongement structural As déterminé en appliquant la norme ASTM D2969-04 de 2014 tel que As ≥ 3,00 %.
Le câble selon l'invention vérifie MC ≤ 127 avec MC= 200 x cos⁴(α) x [M x (D1 / 2)² x cos⁴(β) + P x (D2 / 2)² x cos⁴(γ)] / [M x (D1 / 2)² + P x (D2 / 2)²] avec:
- D1 et D2 étant exprimés en mm,
- α l'angle d'hélice de chaque toron dans le câble,
- β l'angle d'hélice de chaque fil métallique interne dans la couche interne, et
- γ l'angle d'hélice de chaque fil métallique externe dans la couche externe.

L'indicateur MC est représentatif du module élastique du câble. Dans cette formule, le facteur 200 représente le module élastique de l'acier qui est de l'ordre de 200 GPa.
Dans le câble selon l'invention, la résistance mécanique d'au moins 50% des fils métalliques de diamètre D1 et D2, mesurée selon la norme ASTM D2969-04, est supérieure ou égale à 3500-2000 x D1 pour un fil métallique de diamètre D1 et supérieure ou égale à 3500-2000 x D2 pour un fil métallique de diamètre D2.

Grâce à l'allongement structural relativement élevé et à l'indicateur MC représentatif du module élastique du câble relativement faible, le câble selon l'invention permet de réduire les perforations et donc d'allonger la durée de vie du pneumatique. En effet, les inventeurs à l'origine ont découvert qu'un câble moins rigide que celui de l'état de la technique est plus performant à l'encontre des obstacles. Les inventeurs ont trouvé qu'il était plus efficace d'épouser l'obstacle grâce à un câble présentant une rigidité moindre plutôt que de tenter de rigidifier et de renforcer autant que possible les câbles pour s'opposer aux déformations imposées par les obstacles comme cela est enseigné d'une manière générale dans l'état de la technique. En épousant les obstacles, on diminue l'effort s'opposant aux obstacles et donc le risque de perforer le pneumatique.

Grâce à l'allongement structural relativement élevé, à l'indicateur MC représentatif du module élastique du câble relativement faible et à la résistance mécanique relativement élevée de la majorité des fils métalliques du câble, le câble selon l'invention permet également de réduire le nombre de rupture. En effet, les inventeurs à l'origine de l'invention ont découvert que le critère déterminant pour réduire les ruptures du câbles n'était pas uniquement la force à rupture comme cela est largement enseigné dans l'état de la technique mais l'énergie à rupture représentée dans la présente demande par un indicateur égal au produit de la force à rupture et de l'allongement à rupture. En effet, les câbles de l'état de la technique présentent soit une force à rupture relativement élevée mais un allongement à rupture relativement faible, soit un allongement à rupture relativement élevé mais une force à rupture relativement faible. Dans les deux cas, les câbles de l'état de la technique rompent sous une énergie relativement faible. Le câble selon l'invention, du fait de son allongement structural relativement élevé présente un allongement à rupture nécessairement relativement élevé. De façon synergique, le module relativement faible permet de repousser l'allongement à rupture du fait d'une pente de la courbe force-allongement dans le domaine élastique relativement faible. Enfin et surtout, les inventeurs ont découvert que l'augmentation de la résistance mécanique de la majorité des fils métalliques permettaient, comme cela est démontré par les tests comparatifs ci-après, d'une part, d'augmenter l'allongement structural, ce qui comme expliqué ci-dessus permet de repousser l'allongement à rupture et donc l'indicateur d'énergie à rupture, et d'autre part, d'augmenter la force à rupture, ce qui permet d'augmenter l'indicateur d'énergie à rupture.

L'allongement structural As, grandeur bien connue de l'homme du métier, est déterminé par exemple en appliquant la norme ASTM D2969-04 de 2014 à un câble testé de façon à obtenir une courbe force-allongement. On déduit l'As sur la courbe obtenue comme l'allongement, en %, correspondant à la projection sur l'axe des allongement de l'intersection entre la tangente à la partie structurale de la courbe force-allongement et la tangente à la partie élastique de la courbe force-allongement. Pour rappel, une courbe force allongement comprend, en se déplaçant vers les allongements croissants, une partie structurale, une partie élastique et une partie plastique. La partie structurale correspond à un allongement structural du câble résultant du rapprochement des différents torons et fils métalliques constituants le câble. La partie élastique correspond à un allongement élastique résultant de la construction du câble, notamment des angles des différentes couches et des diamètres des fils métalliques. La partie plastique correspond à l'allongement plastique résultant de la plasticité (déformation irréversible au-delà de la limite d'élasticité) des fils métalliques.Les angles d'hélice sont définis par les formules suivantes :
α = arctan (2 x π x R3 / p3) dans laquelle R3 est le rayon d'enroulement des torons et p3 est le pas d'enroulement des torons.
β = arctan (2 x π x R1 / p1) dans laquelle R1 est le rayon d'enroulement du ou des M fils métalliques internes et p1 est le pas auquel est ou sont assemblés le ou les M fils métalliques internes dans le câble. Le pas p1 est tel que 1/p1 = 1/p10 + 1/p3 avec p10 le pas du ou des M fils métalliques internes dans le toron avant assemblage des torons pour former le câble. Dans le cas où M=1, R1 =0 et donc β=0.
γ = arctan (2 x π x R2 / p2) dans laquelle R2 est le rayon d'enroulement des N fils métalliques externes et p2 est le pas auquel sont assemblés les N fils métalliques externes dans le câble. Le pas p2 est tel que 1/p2 = 1/p20 + 1/p3 avec p20 le pas des M fils métalliques externes dans le toron avant assemblage des torons pour former le câble.

Le rayon d'enroulement R3 est mesuré sur une coupe transversale perpendiculaire à l'axe principal du câble et correspond à la distance entre le centre de l'hélice décrite par chaque toron et le centre du câble. De façon analogue, les rayons d'enroulement R1 et R2 sont mesurés sur une coupe transversale perpendiculaire à l'axe principal de chaque toron pris individuellement et correspondent à la distance entre le centre de l'hélice décrite par respectivement chaque fil interne et externe et le centre du toron.

Dans l'invention, le câble comprend une unique couche de N torons, c'est-à-dire qu'il comprend un assemblage constitué d'une couche de torons, ni plus ni moins, c'est-à-dire que l'assemblage a une couche de torons, pas zéro, pas deux, mais uniquement une.

Chaque toron est à deux couches, c'est-à-dire qu'il comprend un assemblage constitué de deux couches de fils métalliques, ni plus ni moins, c'est-à-dire que l'assemblage a deux couches de fils métalliques, pas une, pas trois, mais uniquement deux. La couche externe de chaque toron est enroulée autour de la couche interne de ce toron au contact de la couche interne de ce toron.

Le câble tel que défini ci-dessus et selon l'invention est nu c'est-à-dire dépourvu de toute composition polymérique, notamment le câble est dépourvu de toute composition élastomérique.

Par fil métallique, on entend un monofilament métallique comprenant une âme constitué majoritairement (c'est-à-dire pour plus de 50% de sa masse) ou intégralement (pour 100% de sa masse) d'un matériau métallique, par exemple en acier au carbone. Le fil métallique peut avantageusement comprendre une couche d'un revêtement métallique revêtant l'âme, le revêtement métallique étant choisi parmi le zinc, le cuivre, l'étain et les alliages de ces métaux, par exemple le laiton. Chaque fil est préférentiellement en acier perlitique ou ferrito-perlitique au carbone.

Les valeurs des caractéristiques décrites dans la présente demande pour le câble nu sont mesurées sur ou déterminées à partir des câbles directement après fabrication, c'est-à-dire avant toute étape de noyage dans une matrice polymérique, notamment élastomérique.

Dans la présente demande, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Dans un mode de réalisation préféré, As ≥ 3,10 %. Ainsi, on augmente encore davantage l'indicateur d'énergie à rupture du câble et donc on réduit le risque de rupture.

De façon optionnelle, As ≤ 4,00 %, de préférence As ≤ 3,75 % et plus préférentiellement As ≤ 3,50 %. En limitant l'allongement structural, on s'assure que le câble peut néanmoins reprendre suffisamment d'efforts pour des déformations relativement faibles.

Dans des modes de réalisation avantageux permettant d'atteindre les propriétés décrites ci-dessus, α va de 13° à 39°, de préférence de 16° à 27° et plus préférentiellement de 21° à 27°.

Dans des modes de réalisation avantageux permettant d'atteindre les propriétés décrites ci-dessus, β va de 6° à 22°, de préférence de 8° à 15°.

Dans des modes de réalisation avantageux permettant d'atteindre les propriétés décrites ci-dessus, γ va de 13° à 30°, de préférence de 16° à 23°.

Dans un mode de réalisation préféré, MC ≤ 125. En réduisant davantage l'indicateur de module MC, on prolonge encore davantage la partie élastique et donc on augmente l'indicateur d'énergie à rupture.

De façon avantageuse, MC ≥ 100, de préférence MC ≥ 110 et plus préférentiellement MC ≥ 115. Avec un indicateur de module MC relativement élevé, on s'assure que le câble peut néanmoins reprendre suffisamment d'efforts pour des déformations relativement faibles.

Avantageusement, le câble présente une force à rupture Fr telle que Fr ≥ 8500 N, de préférence Fr ≥ 9000 N, plus préférentiellement Fr ≥ 9350 N et encore plus préférentiellement Fr ≥ 9600 N. La force à rupture est mesurée selon la norme ASTM D2969-04.

Avantageusement, le câble présente un allongement à rupture Ar tel que Ar ≥ 6,50 %, de préférence Ar ≥ 6,75 % et plus préférentiellement Ar ≥ 6,90 %. L'allongement à rupture est mesuré selon la norme ASTM D2969-04.

De façon très préférée, le câble présente un indicateur d'énergie à rupture Er égal au produit de la force à rupture Fr exprimée en N et de l'allongement à rupture Ar exprimé en %, telle que Er ≥ 60000 N.%, de préférence Er ≥ 63000 N.% et plus préférentiellement Er ≥ 64000 N.%.

De façon très avantageuse, le câble présente un indicateur d'énergie à rupture Er égal au produit de la force à rupture Fr exprimée en N et de l'allongement à rupture Ar exprimé en %, et un diamètre D exprimé en mm tels que Er/D ≥ 15000, de préférence Er/D ≥ 15800, plus préférentiellement Er/D ≥ 16000 et très préférentiellement Er/D ≥ 16500. Ainsi, le câble présente un compromis avantageux entre énergie à rupture et encombrement, notamment afin de réduire l'épaisseur de la nappe dans laquelle se trouvera le câble et donc le poids du pneumatique.

L'invention a également pour invention un câble extrait d'une matrice polymérique, le câble présentant une structure 1xN comprenant une unique couche de N torons enroulés en hélice, chaque toron étant à deux couches de fils métalliques et comprenant :
- une couche interne constituée de M≥1 fil(s) métallique(s) interne(s) de diamètre D1,
- une couche externe constituée de P>1 fils métalliques externes de diamètre D2 enroulés autour de la couche interne.
Le câble extrait selon l'invention présente un allongement structural As' déterminé en appliquant la norme ASTM D2969-04 de 2014 tel que As' ≥ 1,00 %.
Le câble extrait selon l'invention présente un module élastique MC' ≤ 80 GPa.
Dans le câble extrait selon l'invention, la résistance mécanique d'au moins 50% des fils métalliques de diamètre D1 et D2, mesurée selon la norme ASTM D2969-04, est supérieure ou égale à 3500-2000 x D1 pour un fil métallique de diamètre D1 et supérieure ou égale à 3500-2000 x D2 pour un fil métallique de diamètre D2.

Le câble extrait selon l'invention est issu du noyage d'un câble nu dans la matrice polymérique au contraire du câble nu décrit précédemment qui est dépourvu de toute matrice polymérique.

L'allongement structural As' du câble extrait est mesuré d'une façon analogue à l'allongement structural As du câble nu défini précédemment.

Le module élastique MC' du câble extrait est calculé en mesurant la pente de la partie élastique d'une courbe force-allongement obtenue en appliquant la norme ASTM D2969-04 de 2014 au câble extrait testé, puis en rapportant cette pente à la section métallique du câble, c'est-à-dire la somme des sections des fils constituants le câble extrait. Alternativement, on peut déterminer la section métallique en mesurant la masse linéique métallique du câble extrait conformément à la norme ASTM D2969-04 de 2014 et en divisant cette masse linéique métallique par la densité de l'acier utilisé.

De préférence, la matrice polymérique est une matrice élastomérique.

Le câble extrait selon l'invention est obtenu par noyage dans une matrice polymérique d'un câble nu dépourvu de matrice polymérique tel que défini précédemment. La matrice polymérique, de préférence élastomérique, est à base d'une composition polymérique, de préférence élastomérique.

Dans un câble extrait selon l'invention, la voûte du câble délimitée par les torons et correspondant au volume délimité par un cercle théorique, d'une part, radialement intérieur à chaque toron et, d'autre part, tangent à chaque toron est remplie de la matrice polymérique, de préférence élastomérique.

Par matrice polymérique, on entend une matrice comprenant au moins un polymère. La matrice polymérique est ainsi à base d'une composition polymérique.

Par matrice élastomérique, on entend une matrice à comportement élastomérique issue de la réticulation d'une composition élastomérique. La matrice élastomérique préférentielle est ainsi à base de la composition élastomérique.

Par l'expression "à base de", il faut entendre que la composition comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères

Par composition élastomérique, on entend que la composition comprend au moins un élastomère et au moins un autre composant. De préférence, la composition comprenant au moins un élastomère et au moins un autre composant comprend un élastomère, un système de réticulation et une charge. Les compositions utilisées pour ces nappes sont des compositions conventionnelles pour calandrage d'éléments filaires de renfort, comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs. L'adhésion entre les fils métalliques et la matrice dans laquelle ils sont noyés est assurée par exemple par un revêtement métallique, par exemple une couche de laiton.

Les valeurs des caractéristiques décrites dans la présente demande pour le câble extrait sont mesurées sur ou déterminées à partir de câbles extrait d'une matrice polymérique, notamment élastomérique, par exemple d'un pneumatique. Ainsi, par exemple sur un pneumatique, on retire la bande de matière radialement à l'extérieur du câble à extraire de façon à apercevoir le câble à extraire affleurer radialement de la matrice polymérique. Ce retrait peu se faire par décorticage au moyens de pinces et de couteaux ou bien par rabotage. Puis, on dégage l'extrémité du câble à extraire au moyen d'un couteau. Puis, on tire sur le câble de façon à l'extraire de la matrice en appliquant un angle relativement faible de façon à ne pas plastifier le câble à extraire. Les câbles extraits sont alors nettoyés soigneusement, par exemple au moyen d'un couteau, de façon à détacher les restes de matrice polymérique accrochés localement au câble et en prenant soin de ne pas dégrader la surface des fils métalliques.

Dans un mode de réalisation préféré, As' ≥ 1,05 % et plus préférentiellement As' ≥ 1,10 %. Ainsi, on augmente encore davantage l'indicateur d'énergie à rupture du câble dans la matrice polymérique, et donc on réduit le risque de rupture.

De façon optionnelle, As' ≤ 1,50 % et de préférence As' ≤ 1,40 %. En limitant l'allongement structural, on s'assure que le câble dans la matrice polymérique peut néanmoins reprendre suffisamment d'efforts pour des déformations relativement faibles.

Dans un mode de réalisation préféré, MC' ≤ 77 GPa. En réduisant davantage l'indicateur de module MC', on prolonge encore davantage la partie élastique et donc on augmente l'indicateur d'énergie à rupture.

De façon avantageuse, MC' ≥ 60 GPa, de préférence MC' ≥ 65 GPa et plus préférentiellement MC' ≥ 68 GPa. Avec un indicateur de module MC' relativement élevé, on s'assure que le câble dans la matrice polymérique peut néanmoins reprendre suffisamment d'efforts pour des déformations relativement faibles.

Avantageusement, le câble extrait présente une force à rupture Fr' telle que Fr' ≥ 8500 N, de préférence Fr' ≥ 9000 N. La force à rupture est mesurée sur le câble extrait selon la norme ASTM D2969-04.

Avantageusement, le câble extrait présente un allongement à rupture Ar' tel que Ar' ≥ 3,70 %, de préférence Ar' ≥ 3,80 % et plus préférentiellement Ar' ≥ 3,90 %. L'allongement à rupture est mesuré sur le câble extrait selon la norme ASTM D2969-04.

De façon très préférée, le câble extrait présente un indicateur d'énergie à rupture Er' égal au produit de la force à rupture Fr' du câble extrait, exprimée en N, et de l'allongement à rupture Ar' du câble extrait, exprimé en %, telle que Er' ≥ 33000 N.%, de préférence Er' ≥ 35000 N.% et plus préférentiellement Er' ≥ 36000 N.%.

De façon très avantageuse, le câble extrait présente un indicateur d'énergie à rupture Er' égal au produit de la force à rupture Fr' du câble extrait, exprimée en N, et de l'allongement à rupture Ar' du câble extrait, exprimé en %, et un diamètre D exprimé en mm tels que Er'/D ≥ 8500, de préférence Er'/D ≥ 8800, plus préférentiellement Er'/D ≥ 9000 et très préférentiellement Er'/D ≥ 9100. Ainsi, le câble extrait présente un compromis avantageux entre énergie à rupture et encombrement, notamment afin de réduire l'épaisseur de la nappe dans laquelle se trouvera le câble et donc le poids du pneumatique.

Les caractéristiques avantageuses décrites ci-dessous s'appliquent indifféremment au câble nu comme au câble extrait tels que définis ci-dessus.

De façon préférée, la résistance mécanique d'au moins 60% des fils métalliques, de préférence d'au moins 70% des fils métalliques et plus préférentiellement de chaque fil métallique de diamètre D1 et D2, mesurée selon la norme ASTM D2969-04, est supérieure ou égale à 3500-2000 x D1 pour un fil métallique de diamètre D1 et supérieure ou égale à 3500-2000 x D2 pour un fil métallique de diamètre D2.

Avantageusement, la résistance mécanique d'au moins 50% des fils métalliques, de préférence d'au moins 60% des fils métalliques, plus préférentiellement d'au moins 70% des fils métalliques et très préférentiellement de chaque fil métallique de diamètre D1 et D2, mesurée selon la norme ASTM D2969-04, est supérieure ou égale à 3600-2000 x D1 pour un fil métallique de diamètre D1 et supérieure ou égale à 3600-2000 x D2 pour un fil métallique de diamètre D2.

Dans des constructions préférées, N=3 ou N=4, de préférence N=4.

Dans des constructions préférées, M=3, 4 ou 5, de préférence M=3.

Dans des constructions préférées, P=7, 8, 9, 10 ou 11, de préférence P=8.

Dans des constructions préférées, les M>1 fils métalliques internes étant enroulés en hélice au pas p1, p1 va de 3 à 11 mm, de préférence de 5 à 9 mm.

Dans des constructions préférées, les P fils métalliques externes étant enroulés en hélice au pas p2, p2 va de 6 à 14 mm, de préférence de 8 à 12 mm.

Dans des constructions préférées, les torons étant enroulés en hélice au pas p3, p3 va de 10 à 30 mm, de préférence de 15 à 25 mm et plus préférentiellement de 15 à 19 mm.

Dans un mode de réalisation très préférentiel, la couche externe de chaque toron est désaturée, de préférence complètement insaturée.

Par définition, une couche de fils désaturée est telle qu'il existe suffisamment d'espace entre les fils de façon à permettre le passage d'une composition polymérique, par exemple d'une composition élastomérique. Ainsi, une couche désaturée signifie que les fils de cette couche ne se touchent pas et qu'il y a suffisamment d'espace entre deux fils adjacents de la couche permettant le passage d'une composition polymérique, par exemple d'une composition élastomérique, au travers de la couche. Par opposition, une couche de fils saturée est telle qu'il n'existe suffisamment pas d'espace entre les fils de la couche de façon à permettre le passage d'une composition polymérique, par exemple d'une composition élastomérique, par exemple car les fils de la couche se touchent deux à deux.

Avantageusement, la distance interfils de la couche externe de chaque toron est supérieure ou égale à 5 µm. De préférence, la distance interfils de la couche externe de chaque toron est supérieure ou égale à 15 µm, plus préférentiellement supérieure ou égale à 35 µm, encore plus préférentiellement supérieure ou égale à 50 µm.

La désaturation de la couche externe de chaque toron permet avantageusement de faciliter le passage d'une composition polymérique, par exemple d'une composition élastomérique jusqu'au centre du toron et donc de rendre le toron moins sensible à la corrosion.

Par définition, une couche complètement insaturée de fils est telle qu'il existe suffisamment de place dans cette couche pour y ajouter au moins un (P+1)^{ième} fil du même diamètre que les P fils de la couche, plusieurs fils pouvant alors être ou non au contact les uns des autres. L'insaturation complète de la couche externe de chaque toron permet de maximiser la pénétration d'une composition polymérique, par exemple d'une composition élastomèrique dans chaque toron et donc de rendre chaque toron encore moins sensible à la corrosion. Ainsi, avantageusement, la somme SI2 des distances interfils de la couche externe de chaque toron est telle que SI2 ≥ D2. La somme SI2 est la somme des distances interfils séparant chaque couple de fils adjacents de la couche. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2 par le nombre d'espaces séparant les fils de la couche.

De façon avantageuse et pour des pneumatiques destinés à équiper des véhicules de génie civil, le diamètre D1, D2 de chaque fil métallique va de 0,25 mm à 0,50 mm, de préférence de 0,30 mm à 0,45 mm et plus préférentiellement de 0,32 mm à 0,40 mm.

Dans des modes de réalisation préférés, chaque fil interne présente un diamètre D1 supérieur ou égal au diamètre D2 de chaque fil externe. L'utilisation de diamètres tels que D1>D2 permet de favoriser la pénétrabilité de la composition polymérique, par exemple de la composition élastomérique, au travers de la couche externe. L'utilisation de diamètres tels que D1=D2 permet de limiter le nombre de fils différents à gérer lors de la fabrication du câble.

Avantageusement, la couche de N torons est désaturée, de préférence incomplètement insaturée.

Par définition, une couche de torons désaturée est telle qu'il existe suffisamment d'espace entre les torons de façon à permettre le passage d'une composition polymérique, de préférence élastomérique. Une couche de torons est désaturée signifie que les torons ne se touchent pas et qu'il y a suffisamment d'espace entre deux torons adjacents permettant le passage d'une composition polymérique, de préférence élastomérique, jusque dans la voûte. Par opposition, une couche de torons saturée est telle qu'il n'existe suffisamment pas d'espace entre les torons de la couche de façon à permettre le passage d'une composition polymérique, de préférence élastomérique, par exemple car les torons de la couche se touchent deux à deux.

Avantageusement, la distance inter-torons de la couche de torons définie, sur une section du câble perpendiculaire à l'axe principal du câble, comme la distance la plus courte qui sépare, en moyenne, les enveloppes circulaires dans lesquelles sont inscrits deux torons adjacents, est, pour une couche de torons désaturée, supérieure ou égale à 30 µm. De préférence, la distance inter-torons moyenne séparant deux torons adjacents est supérieure ou égale à 70 µm, plus préférentiellement à 100 µm, encore plus préférentiellement à 150 µm et très préférentiellement à 200 µm.

Une couche incomplètement insaturée de torons est telle qu'il n'existe pas suffisamment de place dans cette couche pour y ajouter au moins un (N+1)^{ième} toron du même diamètre que les N torons de la couche.

Conformément à l'invention, chaque toron est du type non gommé in situ. Par non gommé in situ, on entend qu'avant assemblage des torons entre eux, chaque toron est constitué des fils des différentes couches et dépourvu de composition polymérique, notamment de composition élastomérique.

De façon avantageuse, chaque fil métallique des au moins 50%, de préférence des au moins 60%, plus préférentiellement des au moins 70% des fils métalliques, et très préférentiellement chaque fil métallique du câble comprend une âme en acier présentant une composition conforme à la norme NF EN 10020 de septembre 2000 et un taux de carbone C > 0,80%, de préférence C ≥ 0,82 %. De telles compositions d'aciers rassemblent les aciers non alliés (points 3.2.1 et 4.1 de la norme NF EN 10020 de septembre 2000), les aciers inoxydables (points 3.2.2 et 4.2 de la norme NF EN 10020 de septembre 2000) et d'autres aciers alliés (point 3.2.3 et 4.3 de la norme NF EN 10020 de septembre 2000). Un taux de carbone relativement élevé permet d'atteindre la résistance mécanique des fils métalliques des câbles selon l'invention. On aurait également pu modifier le procédé de fabrication des fils métalliques, notamment en écrouissant davantage chaque fil métallique afin d'augmenter la résistance mécanique des fils métalliques. Alors que la modification du procédé de fabrication des fils métalliques nécessite des investissements industriels relativement importants, l'utilisation d'un taux de carbone relativement élevé ne nécessite aucun investissement. En outre, l'utilisation d'un taux de carbone relativement élevé permet de préserver l'endurance en flexion-compression des fils métalliques au contraire d'un procédé dans lequel, en écrouissant davantage les fils métalliques, on réduirait sensiblement cette endurance en flexion-compression.

Avantageusement, C ≤ 1,10%, de préférence C ≤ 1,00% et plus préférentiellement C ≤ 0,90%. L'utilisation d'un taux de carbone trop important est d'une part relativement coûteuse et d'autre part entraine une baisse de l'endurance en fatigue-corrosion des fils métalliques.

De façon préférée, le câble nu ou extrait présente un diamètre D tel que D ≤ 4 mm, de préférence tel que 3,5 mm ≤ D ≤ 4 mm. Le diamètre D est mesuré sur le câble nu ou sur le câble extrait selon la norme ASTM D2969-04.

Avantageusement, le câble nu ou le câble extrait est obtenu par un procédé comprenant :
- une étape d'assemblage individuel de chacun des N torons au cours de laquelle, et dans l'ordre chronologique:
   - dans le cas où M>1, on enroule en hélice les M fils métalliques internes pour former la couche interne,
   - on enroule en hélice les P fils métalliques externes autour de la couche interne pour former la couche externe, et
   - une étape d'assemblage collectif par retordage des N torons au cours de laquelle on enroule en hélice les N torons à un pas p3.

Avantageusement, l'étape d'assemblage individuel de chacun des N torons est réalisée par retordage.

Dans ce mode de réalisation avantageux, lors de l'étape d'assemblage individuel, on enroule en hélice les M fils métalliques internes à un pas p10 allant de de 5 à 15 mm, de préférence de 8 à 12 mm.

Toujours dans ce mode de réalisation avantageux, lors de l'étape d'assemblage individuel, on enroule en hélice les P fils métalliques externes à un pas p20 allant de p2 va de 12 à 27 mm, de préférence de 17 à 23 mm.

Dans un mode particulièrement préféré, le câble nu ou le câble extrait est obtenu par un procédé comprenant, postérieurement à l'étape d'assemblage collectif, une étape d'aération du câble dans laquelle:
- on surtord les N torons de façon à passer du pas p3 à un pas transitoire de surtordage p3' tel que p3'<p3, et
- on détord les N torons de façon à passer du pas transitoire de surtordage p3' à un pas intermédiaire p3" tel que p3">p3'.

Dans certains mode de réalisation préférés, p3"≥p3.

L'étape d'aération permet, grâce à une torsion additionnelle, de raccourcir le pas p3 jusqu'au pas transitoire de surtordage p3', et également de façon implicite chaque pas p1 et p2 respectivement jusqu'à des pas transitoires de surtordage p1' et p2'. L'étape de détordage permet de réduire la torsion additionnelle et d'obtenir un pas p3" intermédiaire, et également de façon implicite d'obtenir des pas intermédiaires p1" et p2". La succession et l'ordre des étapes de surtordage puis de détordage permet de déformer plastiquement les fils métalliques et de conférer au câble une aération relativement importante favorisant la pénétrabilité du câble, par exemple par une composition polymérique, notamment une composition élastomérique.

De façon très préférée, le câble nu ou le câble extrait est obtenu par un procédé comprenant, postérieurement à l'étape d'aération du câble, une étape d'équilibrage dans laquelle :
- on détord les N torons de façon à passer du pas intermédiaire p3" à un pas transitoire d'équilibrage p3'" tel que p3‴>p3 et p3‴>p3', et
- on retord les N torons de façon à passer du pas transitoire d'équilibrage p3'" au pas p3.

L'étape d'aération génère un couple de torsion résiduelle au sein du câble. L'étape de détordage, grâce à une torsion inverse, permet d'allonger le pas intermédiaire p3" jusqu'au pas transitoire d'équilibrage p3‴, et également de façon implicite chaque pas intermédiaire p1" et p2" respectivement jusqu'à des pas transitoires d'équilibrage p1"' et p2‴. L'étape de retordage permet de supprimer la torsion inverse et de revenir au pas p3 initial, et également de façon implicite de revenir au pas p1 et p2 initiaux. La succession et l'ordre des étapes de détordage puis de retordage permet de supprimer le couple de torsion résiduelle. Ainsi, le câble obtenu à l'issue de l'étape d'équilibrage présente un couple de torsion résiduelle sensiblement nul. Le couple de torsion résiduelle sensiblement nul correspond au fait que le câble est équilibré en torsion afin de pouvoir être utilisé dans les étapes ultérieures utilisant le câble. Le couple de torsion résiduelle est exprimé en tours par mètres et est mesuré selon la norme ASTM D2969-04 et correspond au nombre de tours que peut effectuer un câble de longueur prédéterminée autour de son axe principal lorsqu'il est laissé libre de mouvement.

Avantageusement, p3/p3'>p3"'/p3. Ainsi, l'amplitude de la torsion additionnelle est supérieure à l'amplitude de la torsion inverse de façon à permettre un équilibrage en altérant le moins possible l'aération du câble.

Un autre objet de l'invention est un pneumatique pour véhicule de génie civil, comprenant au moins un élément filaire de renfort formé, après extraction du pneumatique, par un câble extrait tel que défini ci-dessus.

Encore un autre objet de l'invention est un pneumatique pour véhicule de génie civil, comprenant au moins un élément filaire de renfort obtenu par noyage d'un câble nu tel que défini ci-dessus dans une matrice polymérique. Comme décrit précédemment, le câble nu une fois noyé dans la matrice polymérique forme un câble qui, une fois extrait du pneumatique, forme un câble extrait conforme à l'invention.

Un autre objet de l'invention est un pneumatique pour véhicule de génie civil, comprenant au moins un élément filaire de renfort formé, après extraction du pneumatique, par un câble extrait tel que défini ci-dessus et obtenu par noyage d'un câble nu tel que défini ci-dessus dans une matrice polymérique.

Dans un mode de réalisation préféré, le pneumatique comprenant :
- un sommet comprenant une bande de roulement et une armature de sommet,
- deux flancs,
- deux bourrelets,
chaque flanc reliant chaque bourrelet au sommet, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement, l'armature de sommet comprend le au moins un élément filaire de renfort formé, après extraction du pneumatique, par un câble extrait tel que défini ci-dessus et/ou obtenu par noyage d'un câble nu tel que défini ci-dessus dans une matrice polymérique.

Dans un mode de réalisation, l'armature de carcasse comprend au moins une nappe de carcasse comprenant des éléments filaires de renfort de carcasse s'étendant d'un bourrelet à l'autre de manière à faire un angle allant de 80° à 90° avec la direction circonférentielle du pneumatique.

Dans ce mode de réalisation, l'armature de sommet s'étend préférentiellement, selon la direction circonférentielle du pneumatique, sur toute la circonférence du pneumatique.

Avantageusement, l'armature de sommet comprend une armature de protection agencée radialement sur l'extérieur de l'armature de sommet. Ainsi, l'armature de sommet ne comprend aucune autre armature renforcée par des éléments de renfort filaires agencée radialement à l'extérieur de l'armature de protection.

De préférence, l'armature de protection comprend le au moins un élément filaire de renfort formé, après extraction du pneumatique, par un câble extrait tel que défini ci-dessus et/ou obtenu par noyage d'un câble nu tel que défini ci-dessus dans une matrice polymérique.

Plus préférentiellement, l'armature de protection comprenant au moins une nappe de protection comprenant un ou plusieurs éléments filaire de renfort de protection faisant un angle supérieur ou égal à 10°, de préférence allant de 10° à 45° et plus préférentiellement de 15° à 40° avec la direction circonférentielle du pneumatique, le ou chaque élément filaire de renfort de protection est formé par le au moins un élément filaire de renfort formé, après extraction du pneumatique, par un câble extrait tel que défini ci-dessus et/ou obtenu par noyage d'un câble nu tel que défini ci-dessus dans une matrice polymérique.

Dans un mode de réalisation préféré, l'armature de protection comprend deux nappes de protection, chaque nappe de protection comprenant un ou plusieurs éléments filaire de renfort de protection faisant un angle supérieur ou à 10°, de préférence allant de 10° à 45° et plus préférentiellement de 15° à 40° avec la direction circonférentielle du pneumatique, le ou chaque élément filaire de renfort de protection est formé par le au moins un élément filaire de renfort formé, après extraction du pneumatique, par un câble extrait tel que défini ci-dessus et/ou obtenu par noyage d'un câble nu tel que défini ci-dessus dans une matrice polymérique.

De préférence, l'orientation de l'angle fait par les éléments filaires de renfort de protection avec la direction circonférentielle du pneumatique dans une nappe de protection est opposée à l'orientation de l'angle fait par les éléments filaires de renfort de protection avec la direction circonférentielle du pneumatique dans l'autre nappe de protection. En d'autres termes, les éléments de renfort filaires de protection d'une nappe de protection sont croisés avec les éléments de renfort filaires de protection de l'autre nappe de protection. Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Dans certains modes de réalisation préférentiels, l'armature de sommet comprend une armature de frettage agencée radialement à l'intérieur de l'armature de protection.

Avantageusement, l'armature de frettage comprend le au moins un élément filaire de renfort formé, après extraction du pneumatique, par un câble extrait tel que défini ci-dessus et/ou obtenu par noyage d'un câble nu tel que défini ci-dessus dans une matrice polymérique.

Dans un mode de réalisation préféré, l'armature de protection et l'armature de frettage comprennent chacune au moins un élément filaire de renfort métallique formé, après extraction du pneumatique, par un câble extrait tel que défini ci-dessus et/ou obtenu par noyage d'un câble nu tel que défini ci-dessus dans une matrice polymérique.

Avantageusement, l'armature de frettage comprend au moins une nappe de frettage comprenant un ou plusieurs éléments filaires de renfort de frettage faisant un angle inférieur ou égal à 10°, de préférence inférieur ou égal à 5° et plus préférentiellement sensiblement nul avec la direction circonférentielle du pneumatique, le ou chaque élément filaire de renfort filaire de frettage est formé par le au moins un élément filaire de renfort formé, après extraction du pneumatique, par un câble extrait tel que défini ci-dessus et/ou obtenu par noyage d'un câble nu tel que défini ci-dessus dans une matrice polymérique. L'utilisation d'un câble selon l'invention dans l'armature de frettage permet d'assurer une reprise des efforts liés à la pression de gonflage et de limiter l'expansion radiale du pneumatique. Cette reprise et cette limitation sont, compte tenu de la nature relativement souple du au moins un élément filaire de renfort métallique, d'autant plus efficace que l'angle fait par les éléments filaires de renfort de frettage avec la direction circonférentielle du pneumatique est faible.

Dans un mode de réalisation préféré, l'armature de frettage comprend deux couches de frettage, chaque couche de frettage comprenant un ou plusieurs éléments filaires de renfort de frettage faisant un angle inférieur ou égal à 10°, de préférence inférieur ou égal à 5° et plus préférentiellement sensiblement nul avec la direction circonférentielle du pneumatique, le ou chaque élément filaire de renfort filaire de frettage est formé par le au moins un élément filaire de renfort formé, après extraction du pneumatique, par un câble extrait tel que défini ci-dessus et/ou obtenu par noyage d'un câble nu tel que défini ci-dessus dans une matrice polymérique.

Dans un monde de réalisation, les deux couches sont formées par une nappe circonférentiellement continue, la nappe étant enroulée sur au moins deux tours circonférentiels complets, chaque tour circonférentiel complet formant une couche.

De préférence, lorsque l'angle fait par le ou les éléments filaires de renfort de frettage est sensiblement non nul, l'orientation de l'angle fait par les éléments filaires de renfort de frettage avec la direction circonférentielle du pneumatique dans une couche de frettage est opposée à l'orientation de l'angle fait par les éléments filaires de renfort de frettage avec la direction circonférentielle du pneumatique dans l'autre couche de frettage. En d'autres termes, les éléments de renfort filaires de frettage d'une couche de frettage sont croisés avec les éléments de renfort filaires de frettage de l'autre couche de frettage.

Dans des modes de réalisation préférés, l'armature de sommet comprend une armature de travail agencée radialement à l'intérieur de l'armature de protection.

Avantageusement, l'armature de travail comprend au moins une nappe de travail comprenant un ou plusieurs éléments filaires de renfort de travail faisant un angle inférieur ou égal à 70°, de préférence inférieur ou égal à 60° et plus préférentiellement allant de 15° à 40° avec la direction circonférentielle du pneumatique.

Dans un mode de réalisation préféré, l'armature de travail comprend deux nappes de travail, chaque nappe de travail comprenant un ou plusieurs éléments filaires de renfort de travail faisant un angle inférieur ou égal à 70°, de préférence inférieur ou égal à 60° et plus préférentiellement allant de 15° à 40° avec la direction circonférentielle du pneumatique.

De préférence, l'orientation de l'angle fait par les éléments filaires de renfort de travail avec la direction circonférentielle du pneumatique dans une nappe de travail est opposée à l'orientation de l'angle fait par les éléments filaires de renfort travail avec la direction circonférentielle du pneumatique dans l'autre nappe de travail. En d'autres termes, les éléments de renfort filaires de travail d'une nappe de travail sont croisés avec les éléments de renfort filaires de travail de l'autre nappe de travail. Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Dans un mode de réalisation, l'armature de travail comprenant deux nappes de travail, l'armature de frettage est agencée radialement entre les deux nappes de travail.

Dans un mode de réalisation, le pneumatique présente une dimension de type W R U avec U≥35, de préférence U≥49 et plus préférentiellement U≥57. Cette désignation de la dimension du pneumatique est conforme à la nomenclature de l'ETRTO (« European Tyre and Rim Technical Organisation »).

L'invention sera mieux comprise à la lecture de la description qui va suivre, donnée uniquement à titre d'exemple non limitatif et faite en se référant aux dessins dans lesquels :
- la figure 1 est une vue en coupe simplifiée d'un pneumatique selon l'invention ;
- la figure 2 est une vue de détails de la partie II du pneumatique de la figure 1 ;
- la figure 3 est une vue schématique en coupe perpendiculaire à l'axe du câble (supposé rectiligne et au repos) d'un câble extrait selon l'invention ;
- la figure 4 est une courbe force-allongement du câble extrait de la figure 3;
- la figure 5 est une vue schématique en coupe perpendiculaire à l'axe du câble (supposé rectiligne et au repos) du câble de la figure 3 dans son état nu et selon l'invention ;
- la figure 6 est une courbe force-allongement du câble nu de la figure 5 ;
- les figures 7 et 8 sont des vues schématiques d'une installation et d'un procédé permettant de fabriquer le câble nu et le câble extrait selon l'invention.

Sur les figures, on a représenté un repère X, Y, Z correspondant respectivement aux orientations habituelles axiale, radiale et circonférentielle d'un pneumatique.

Le plan circonférentiel médian M du pneumatique est le plan qui est normal à l'axe de rotation du pneumatique et qui se situe à équidistance des structures annulaires de renfort de chaque bourrelet et passe par le milieu de l'armature de sommet.

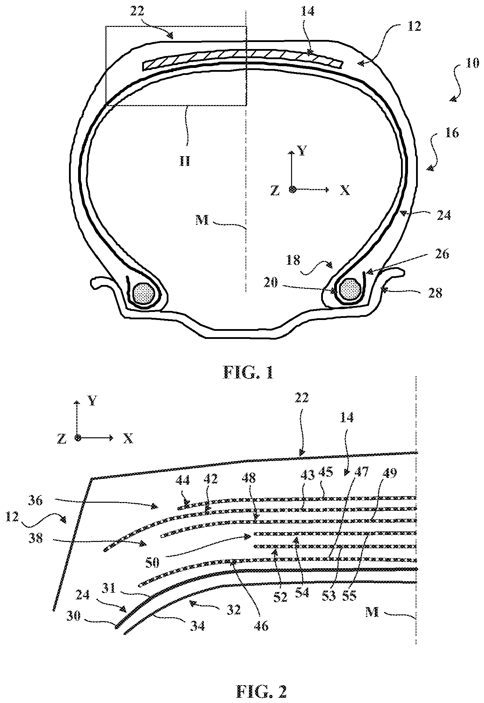

On a représenté sur les figures 1 et 2 un pneumatique pour véhicule de type génie civil, par exemple de type « dumper », et désigné par la référence générale 10. Ainsi, le pneumatique 10 présente une dimension de type W R U, par exemple 40.00 R 57 ou encore 59/80 R 63.

De façon connue pour l'homme du métier, W, désigne :
- lorsqu'il est sous la forme H/B, le rapport nominal d'aspect H/B tel que défini par l'ETRTO (H étant la hauteur de la section du pneumatique et B étant la largeur de la section du pneumatique)
- lorsqu'il est sous la forme H.00 ou B.00, dans lequel H=B, H et B étant tel que défini ci-dessus.
U représente le diamètre, en pouces, du siège de la jante sur laquelle le pneumatique est destiné à être monté, R désigne le type d'armature de carcasse du pneumatique, ici radiale. On a U≥35, de préférence U≥49 et plus préférentiellement U≥57.

Le pneumatique 10 comprend un sommet 12 comprenant une bande de roulement 22 et une armature de sommet 14. La bande de roulement 22 est agencée radialement à l'extérieure de l'armature de sommet 14. L'armature de sommet 14 s'étend, selon la direction circonférentielle Z du pneumatique 10, sur toute la circonférence du pneumatique 10.

Le pneumatique 10 comprend également deux flancs 16 et deux bourrelets 18, chacun de ces bourrelets 18 étant renforcé avec une structure annulaire, ici une tringle 20. Chaque flanc 16 relie chaque bourrelet 18 au sommet 12.

Le pneumatique 10 comprend également une armature de carcasse 24 ancrée dans chacun des deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 s'étend dans les flancs 16 et dans le sommet 12. L'armature de sommet 14 est radialement intercalée entre l'armature de carcasse 24 et la bande de roulement 22.

L'armature de carcasse 24 comprend au moins une nappe de carcasse 30 comprenant des éléments filaires de renfort de carcasse 31 et s'étendant d'un bourrelet 18 à l'autre de manière à faire un angle allant de 80° à 90° avec la direction circonférentielle Z du pneumatique 10.

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend une armature de protection 36 agencée radialement à l'intérieur de la bande de roulement 22, une armature de travail 38 agencée radialement à l'intérieur de l'armature de protection 36 et une armature de frettage 50 agencée radialement à l'intérieur de l'armature de protection 36. L'armature de protection 36 est ainsi radialement intercalée entre la bande de roulement 22 et l'armature de travail 38. L'armature de protection 36 est ainsi également agencée radialement sur l'extérieur de l'armature de sommet 14.

L'armature de protection 36 comprend des première et deuxième nappes de protection 42, 44, la première nappe 42 étant agencée radialement à l'intérieur de la deuxième nappe 44. Chaque première et deuxième nappes de protection 42, 44 comprend respectivement des premiers et deuxièmes éléments filaires de renfort de protection 43, 45 agencés les uns sensiblement parallèlement aux autres dans chaque première et deuxième nappe de protection 42, 44. Chaque premier et deuxième élément filaire de renfort de protection 43, 45 fait un angle supérieur ou égal à 10°, de préférence allant de 10° à 45° et préférentiellement de 15° à 40° avec la direction circonférentielle Z du pneumatique 10. De façon optionnelle, les premiers et deuxièmes éléments filaires de renfort de protection 43, 45 sont croisés d'une nappe de protection à l'autre. En l'espèce, chaque premier élément filaire de renfort de protection 43 fait un angle égal à +33° avec la direction circonférentielle Z du pneumatique 10 et chaque deuxième élément filaire de renfort de protection 45 fait un angle égal à -33° avec la direction circonférentielle Z du pneumatique 10.

L'armature de travail 38 comprend des première et deuxième nappes de travail 46, 48, la première nappe 46 étant agencée radialement à l'intérieur de la deuxième nappe 48. Chaque première et deuxième nappe de travail 46, 48 comprend respectivement des premiers et deuxièmes éléments filaires de renfort de travail 47, 49 agencés les uns sensiblement parallèlement aux autres dans chaque première et deuxième nappe de travail 46, 48. Chaque premier et deuxième élément filaire de renfort métallique de travail 47, 49 fait un angle inférieur ou égal à 70°, de préférence inférieur ou égal à 60° et plus préférentiellement allant de 15° à 40° avec la direction circonférentielle Z du pneumatique 10. De façon optionnelle, les premiers et deuxièmes éléments filaires de renfort de travail 47, 49 sont croisés d'une nappe de travail à l'autre. En l'espèce, chaque premier élément filaire de renfort métallique de travail 47 fait un angle égal à +19° avec la direction circonférentielle Z du pneumatique 10 et chaque deuxième élément filaire de renfort de travail 49 fait un angle égal à -33° avec la direction circonférentielle Z du pneumatique 10. Des exemples de tels éléments de renfort de travail sont décrits dans les documents EP0602733 ou bien encore EP0383716.

L'armature de frettage 50, également appelée bloc limiteur, comprend des première et deuxième couches de frettage 52, 54, chaque première et deuxième couche de frettage 52, 54 comprenant respectivement des premiers et deuxièmes éléments filaires de renfort de frettage 53, 55 agencés les uns sensiblement parallèlement aux autres dans chaque première et deuxième couche de frettage 52, 54. Chaque premier et deuxième élément filaire de renfort de frettage 53, 55 fait un angle inférieur ou égal à 10°, de préférence inférieur ou égal à 5° et plus préférentiellement sensiblement nul avec la direction circonférentielle Z du pneumatique 10. En l'espèce, chaque premier et deuxième élément filaire de renfort de frettage 53, 55 fait un angle sensiblement nul avec la direction circonférentielle Z du pneumatique 10.

Dans le mode de réalisation illustré, l'armature de frettage 50 est avantageusement agencée radialement entre les deux nappes de travail 46, 48.

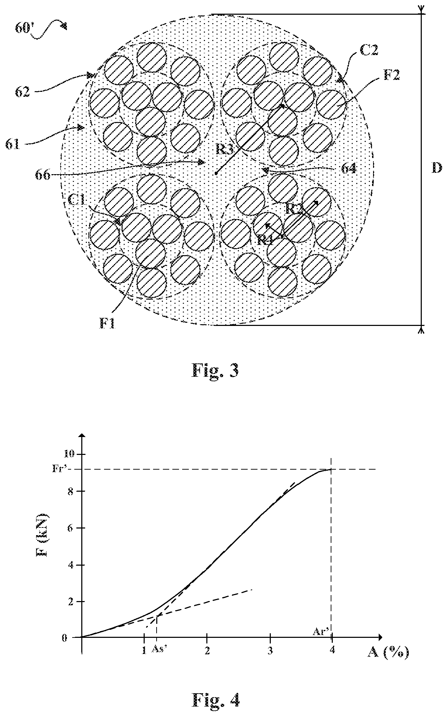

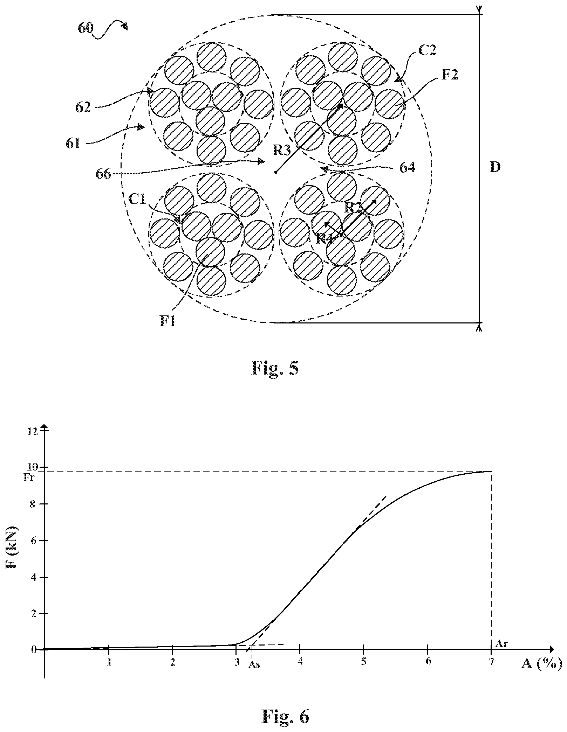

En référence à la figure 3, chaque élément de renfort de protection 43, 45 et chaque élément de renfort de frettage 53, 55 est formé, après extraction du pneumatique 10, par un câble extrait 60' tel que décrit ci-dessous. Le câble 60' est lui obtenu par noyage d'un câble nu 60 illustré sur la figure 5 dans une matrice polymérique, en l'espèce dans une matrice élastomérique formant respectivement chaque matrice élastomérique de chaque nappe de protection 42, 44 et de chaque couche de frettage 52, 54 dans laquelle sont noyés respectivements les éléments de renfort de protection 43, 45 et de frettage 53, 55.

Le câble nu 60 et le câble extrait 60' présentent une structure 1xN comprenant une unique couche 61 de N torons 62 enroulés en hélice définissant une voûte 64 interne du câble. Dans le câble 60', la voûte 64 interne est remplie d'un matériau de remplissage 66 de la voûte interne 64. Le matériau de remplissage 66 est à base d'une composition polymérique, ici à base d'une composition élastomérique identique à la composition de la matrice élastomérique de chaque nappe de protection 42, 44 et de chaque couche de frettage 52, 54 dans laquelle chaque élément de renfort de protection 43, 45 et de frettage 53, 55, ici chaque câble 60, est respectivement noyé.

Chaque toron 62 est à deux couches de fils métalliques et comprend une couche interne C1 constituée de M≥1 fils métalliques internes F1 de diamètre D1 et une couche externe C2 constituée de P>1 fils métalliques externes F2 de diamètre D2 enroulés autour de la couche interne C1.

Ici le câble nu 60 et le câble extrait 60' présentent un diamètre D tel que D ≤ 4 mm, de préférence tel que 3,5 mm ≤ D ≤ 4 mm. En l'espèce, D=3,89 mm.

On a également, N=3 ou N=4 et ici de préférence N=4. De plus, M=3, 4 ou 5 et ici de préférence M=3. En outre, P=7, 8, 9, 10 ou 11 et ici de préférence P=8.

Chaque diamètre D1, D2 de chaque fil métallique F1, F2 va de 0,25 mm à 0,50 mm, de préférence de 0,30 mm à 0,45 mm et plus préférentiellement de 0,32 mm à 0,40 mm. En l'espèce, D1=D2=0,35 mm. Chaque fil métallique F1, F2 comprend une âme en acier présentant une composition d'acier non allié conforme à la norme NF EN 10020 de septembre 2000 et un taux de carbone C > 0,80%, de préférence C ≥ 0,82 % et tel que C ≤ 1,10%, de préférence C ≤ 1,00% et plus préférentiellement C ≤ 0,90%. En l'espèce, C=0,86%. Conformément à l'invention, la résistance mécanique Rm d'au moins 50% des fils métalliques F1, F2 de diamètre D1 et D2, mesurée selon la norme ASTM D2969-04, est supérieure ou égale à 3500-2000 x D1, de préférence 3600-2000 x D1, et supérieure ou égale à 3500-2000 x D2, de préférence 3600-2000 x D2, respectivement pour chaque fil métallique de diamètre D1, D2. En l'espèce, chaque fil métallique F1, F2 présente une résistance mécanique Rm, mesurée selon la norme ASTM D2969-04, supérieure ou égale à 3600-2000 x D1 et supérieure ou égale à 3600-2000 x D2 respectivement pour chaque fil métallique de diamètre D1, D2. Ici, la résistance mécanique Rm de chaque fil F1, F2 est égale à 2960 MPa.

La couche 61 de N torons est désaturée, de préférence incomplètement insaturée. La distance séparant deux torons 62 adjacents est égale à 200 µm.

La couche externe C2 de chaque toron 62 est désaturée, de préférence complètement insaturée. En l'espèce, la distance séparant deux fils externes F2 adjacents est égale à 60 µm.

Les M>1 fils métalliques internes F1 sont, dans le câble nu 60 et le câble extrait 60', enroulés en hélice au pas p1. Le pas p1 va de 3 à 11 mm, de préférence de 5 à 9 mm et ici p1=6,4 mm. L'angle d'hélice β de chaque fil métallique interne F1 dans la couche interne C1 correspondant va de 6° à 22°, de préférence de 8° à 15° et ici β=11,2°.

Les P fils métalliques externes F2 sont, dans le câble nu 60 et le câble extrait 60', enroulés en hélice au pas p2. Le pas p2 va de 6 à 14 mm, de préférence de 8 à 12 mm et ici p2=9,5 mm. L'angle d'hélice γ de chaque fil métallique externe F2 dans la couche externe C2 correspondant va de 13° à 30°, de préférence de 16° à 23° et ici γ =20,0°.

Les torons 62 sont enroulés en hélice au pas p3. Le pas p3 va de 10 à 30 mm, de préférence de 15 à 25 mm et plus préférentiellement de 15 à 19 mm et ici p3=18 mm. L'angle d'hélice α de chaque toron 62 dans le câble nu 60 et le câble extrait 60' va de 13° à 39°, de préférence de 16° à 27° et plus préférentiellement de 21° à 27° et ici α=23,2°.

Le câble 60' présente une force à rupture Fr' telle que Fr' ≥ 8500 N, de préférence Fr' ≥ 9000 N et ici Fr'=9133 N. Le câble 60' présente un allongement à rupture Ar' tel que Ar' ≥ 3,70 %, de préférence Ar' ≥ 3,80 % et plus préférentiellement Ar' ≥ 3,90 % et ici Ar'= 3,96 %. Le câble 60' présente un indicateur d'énergie à rupture Er' égal au produit de la force à rupture Fr' exprimée en N et de l'allongement à rupture Ar' exprimé en %, telle que Er' ≥ 33000 N.%, de préférence Er' ≥ 35000 N.% et plus préférentiellement Er' ≥ 36000 N.% et ici Er'=36167 N.%. Le rapport de l'indicateur d'énergie à rupture Er' sur le diamètre D exprimé en mm est tel que Er'/D ≥ 8500, de préférence Er'/D ≥ 8800, plus préférentiellement Er'/D ≥ 9000 et très préférentiellement Er'/D ≥ 9100. En l'espèce, Er'/D=9297.

Conformément à l'invention et comme cela est illustré sur la figure 4, le câble 60' présente un allongement structural As' supérieur ou égal à 1,00 %, de préférence As' ≥ 1,05 % et plus préférentiellement As' ≥ 1,10 %. En outre, As' ≤ 1,50 % et de préférence As' ≤ 1,40 %. En l'espèce As'=1,20%.

Conformément à l'invention et comme cela est illustré sur la figure 4, le câble 60' présente un module élastique MC' ≤ 80 GPa et de préférence MC' ≤ 77 GPa. En outre, MC' ≥ 60 GPa, de préférence MC' ≥ 65 GPa et plus préférentiellement MC' ≥ 68 GPa. En l'espèce, MC'=74 GPa.

En référence à la figure 6, le câble 60 présente une force à rupture Fr telle que Fr ≥ 8500 N, de préférence Fr ≥ 9000 N, plus préférentiellement Fr ≥ 9350 N et encore plus préférentiellement Fr ≥ 9600 N et en l'espèce, Fr=9835 N. Le câble 60 présente un allongement à rupture Ar tel que Ar ≥ 6,50 %, de préférence Ar ≥ 6,75 % et plus préférentiellement Ar ≥ 6,90 % et en l'espèce Ar=6,99%. Le câble 60 présente un indicateur d'énergie à rupture Er égal au produit de la force à rupture exprimée en N et de l'allongement à rupture exprimé en %, telle que Er ≥ 60000 N.%, de préférence Er ≥ 63000 N.% et plus préférentiellement Er ≥ 64000 N.% et en l'espèce Er=68747 N/.%.

Le câble 60 présente un rapport de l'indicateur d'énergie à rupture Er sur le diamètre D exprimé en mm tel que Er/D ≥ 15000, de préférence Er/D ≥ 15800, plus préférentiellement Er/D ≥ 16000 et très préférentiellement Er/D ≥ 16500 et en l'espèce Er/D= 17673.

Conformément à l'invention, MC ≤ 127 et de préférence MC ≤ 125. En outre, MC ≥ 100, de préférence MC ≥ 110 et plus préférentiellement MC ≥ 115. En l'espèce, MC=117. L'indicateur de module MC est défini par MC= 200 x cos⁴(α) x [M x (D1 / 2)² x cos⁴(β) + P x (D2 / 2)² x cos⁴(γ)] / [M x (D1 / 2)² + P x (D2 / 2)²] avec D1 et D2 étant exprimés en mm, α l'angle d'hélice de chaque toron 62 dans le câble 60, β l'angle d'hélice de chaque fil métallique interne D1 dans la couche interne C1, et γ l'angle d'hélice de chaque fil métallique externe D2 dans la couche externe C2.

Conformément à l'invention et comme cela est illustré sur la figure 6, le câble 60 présente un allongement structural As ≥ 3,00 % et de préférence As ≥ 3,10 %. En outre, As ≤ 4,00 %, de préférence As ≤ 3,75 % et plus préférentiellement As ≤ 3,50 %. En l'espèce, As=3,20%.

Chaque câble nu 60 et câble extrait 60' est obtenu par un procédé comprenant tout d'abord une étape d'assemblage individuel par retordage de chacun des N torons 62 au cours de laquelle, et dans l'ordre chronologique on enroule en hélice les M fils métalliques internes F1 à un pas p10 pour former la couche interne C1, p10 allant de 5 à 15 mm et de préférence de 8 à 12 mm et ici p10=10 mm. Puis, on enroule en hélice les P fils métalliques externes F2 autour de la couche interne C2 à un pas p20 pour former la couche externe C2, le pas p20 allant de 12 à 27 mm, de préférence de 17 à 23 mm et ici p20=20 mm. Le procédé comprend également une étape d'assemblage collectif par retordage des N torons 62 préalablement formés au cours de laquelle on enroule en hélice les N torons 62 à un pas p3 tel que décrit précédemment. Lors de cette étape d'assemblage collectif, le pas des fils métalliques internes F1 et externes F2 passe de p10 et p20 aux pas respectivement p1 et p2 tels que décrits précédemment.

Postérieurement à l'étape d'assemblage collectif, le procédé comprend une étape d'aération du câble nu 60 dans laquelle, tout d'abord, on surtord les N torons 62 de façon à passer du pas p3 à un pas transitoire de surtordage p3' tel que p3'<p3 avec ici p3'=10 mm. Puis, dans l'étape d'aération, on détord les N torons 62 de façon à passer du pas transitoire de surtordage p3' à un pas intermédiaire p3" tel que p3">p3' et tel que p3"≥p3 avec ici p3"=p3=18 mm.

Postérieurement à l'étape d'aération, le procédé comprend une étape d'équilibrage dans laquelle, tout d'abord, on détord les N torons de façon à passer du pas intermédiaire p3" à un pas transitoire d'équilibrage p3'" tel que p3‴>p3 et p3‴>p3' avec ici p3'"=23 mm. Puis, dans l'étape d'équilibrage, on retord les N torons de façon à passer du pas transitoire d'équilibrage p3'" au pas p3. Ici on a avantageusement, p3/p3'>p3"'/p3.

Le pneumatique 10 est lui obtenu par un procédé de fabrication comprenant, en plus des étapes du procédé de fabrication du câble décrites ci-dessus, une étape de noyage du câble 60 dans la matrice polymérique, ici la matrice élastomérique, par exemple par calandrage, afin de former au moins une nappe ou une couche comprenant le câble noyé dans la matrice. Ensuite, le procédé de fabrication du pneumatique 10 comprend des étapes d'assemblage de la nappe ou de la couche avec au moins d'autres produits afin de former une ébauche non réticulée de pneumatique. Puis, le procédé de fabrication du pneumatique 10 comprend une étape de réticulation dans laquelle on vient réticuler, ici par vulcanisation, l'ébauche non réticulée.

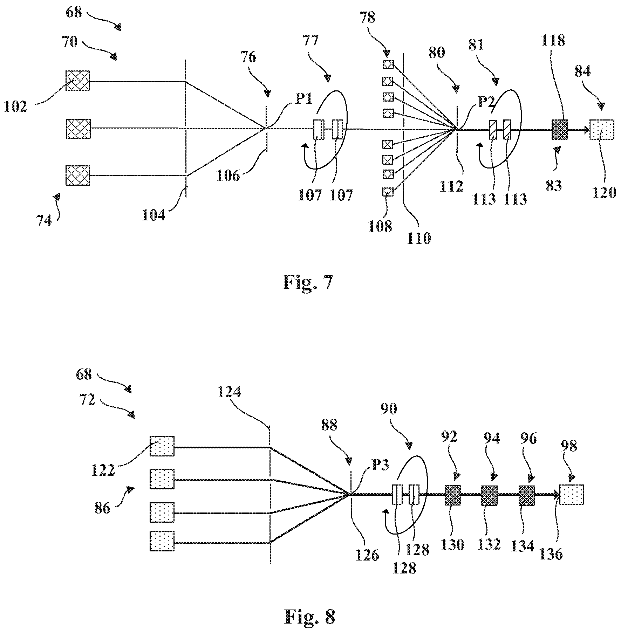

On a illustré sur les figures 7 et 8 une installation 68 permettant de fabriquer le câble nu 60 tel que décrit ci-dessus.

L'installation 68 comprend une installation 70 d'assemblage individuel de chaque toron 62 représentée sur la figure 7 et une installation 72 d'assemblage collectif des torons 62 représentée sur la figure 8.

On rappelle qu'il existe deux techniques possibles d'assemblage de fils métalliques :
- Soit par câblage : dans un tel cas, les fils métalliques ou les torons ne subissent pas de torsion autour de leur propre axe, en raison d'une rotation synchrone avant et après le point d'assemblage ;
- Soit par retordage : dans un tel cas, les fils métalliques ou les torons subissent à la fois une torsion collective et une torsion individuelle autour de leur propre axe, ce qui génère un couple de détorsion sur chacun des fils métalliques et sur le toron ou le câble lui-même.

Le procédé permettant de fabriquer le câble nu 60 utilise le retordage et pas le câblage.

L'installation 70 d'assemblage individuel de chaque toron 62 comprend, d'amont en aval dans le sens de défilement du toron 62, des moyens 74 d'alimentation des M fils métalliques internes F1, des moyens 76 d'assemblage par retordage des M fils métalliques internes F1, des moyens 77 de mise en rotation des M fils métalliques internes assemblés, des moyens 78 d'alimentation des P fils métalliques externes F2, des moyens 80 d'assemblage par retordage des P fils métalliques externes F2 autour de la couche interne C1, des moyens 81 de mise en rotation du toron 62, des moyens 83 de traction du toron 62 et des moyens 84 de stockage du toron 62.

L'installation 72 d'assemblage collectif des torons 62 comprend, d'amont en aval, dans le sens de défilement du câble nu 60, des moyens d'alimentation 86 des N torons 62, des moyens 88 d'assemblages par retordage des N torons 62 ensemble, des moyens 90 de mise en rotation du câble nu 60, des moyens 92 d'aération du câble nu 60, des moyens 94 d'équilibrage du câble nu 60, des moyens 96 de traction du câble nu 60 et des moyens 98 de stockage du câble nu 60.

En référence à la figure 7, les moyens d'alimentation 74 des M fils métalliques internes F1 comprennent des bobines 102 de déroulage de chaque fil métallique interne F1. Les moyens d'assemblage 76 des M fils métalliques internes F1 comprennent un répartiteur 104 ainsi qu'un grain d'assemblage 106 définissant un point d'assemblage P1. Les moyens de mise en rotation 77 comprennent deux volants 107 agencés en aval du point d'assemblage P1.

Les moyens d'alimentation 78 des P fils métalliques externes F2 comprennent des bobines 108 de déroulage de chaque fil métallique externe F2. Les moyens d'assemblage 80 des P fils métalliques externes F2 comprennent un répartiteur 110 ainsi qu'un grain d'assemblage 112 définissant un point d'assemblage P2. Les moyens de mise en rotation 81 comprennent deux volants 113 agencés en aval du point d'assemblage P2.

Les moyens 83 de traction du toron 62 comprennent un ou plusieurs cabestans 118 et les moyens 84 de stockage du toron 62 comprennent une bobine 120 d'enroulage de chaque toron 62.

Chaque toron 62 est ici assemblé par retordage.

En référence à la figure 8, les moyens d'alimentation 86 des N torons 62 comprennent des bobines 122 de déroulage de chaque toron 62. Les moyens 88 d'assemblage des N torons 62 ensemble comprennent un répartiteur 124 ainsi qu'un grain d'assemblage 126 définissant un point d'assemblage P3. Les moyens 90 de mise en rotation du câble nu 60 comprennent deux volants 128 agencés en aval du point d'assemblage P3. Les moyens 92 d'aération comprennent un retordeur 130. Les moyens 94 d'équilibrage comprennent un retordeur 132. Les moyens 96 de traction du câble nu 60 comprennent un ou plusieurs cabestans 134 et les moyens 98 de stockage du câble nu 60 comprennent une bobine 136 d'enroulage du câble nu 60.

### TESTS COMPARATIFS

On a comparé ci-dessous un câble T0 de l'état de la technique tel que divulgué dans WO2016/131862, six câbles témoins T1 à T6 et deux câbles I1 et I2 selon l'invention. Pour chacun de ces câbles, on a mesuré certaines de leurs caractéristiques, à l'état nu et extrait de pneumatique. On notera que le câble I2 correspond, dans son état nu, au câble 60 décrit ci-dessus et, une fois extrait du pneumatique, au câble 60' décrit ci-dessus.

On a fabriqué chaque câble T0, T2, T3, T5 et I1 selon un procédé ne mettant pas en oeuvre une étape d'aération telle que décrite ci-dessus. Au contraire, on a fabriqué chaque câble T2, T4, T6 et I2 selon un procédé mettant en oeuvre une étape d'aération telle que décrite ci-dessus.

On a testé chacun des câbles dans un test de perméabilité à l'air. Un tel test de perméabilité est bien connu de l'homme du métier et permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air; il a été décrit par exemple dans la norme ASTM D2692-98. Un tel test est réalisé sur des câbles issus de fabrication et non vieillis. Les câbles bruts sont préalablement enrobés de l'extérieur par une composition élastomérique dite d'enrobage. Pour cela, une série de 10 câbles disposés parallèlement (distance inter-câble : 20 mm) est placée entre deux couches ou "skims" (deux rectangles de 80 x 200 mm) d'une composition de composition élastomérique diénique à l'état cru, chaque skim ayant une épaisseur de 5 mm ; le tout est alors bloqué dans un moule, chacun des câbles étant maintenu sous une tension suffisante (par exemple 3 daN) pour garantir sa rectitude lors de la mise en place dans le moule, à l'aide de modules de serrage ; puis on procède à la vulcanisation (cuisson) pendant environ 10 à 12 heures à une température d'environ 120°C et sous une pression de 15 bar (piston rectangulaire de 80 x 200 mm). Après quoi, on démoule l'ensemble et on découpe 10 éprouvettes de câbles ainsi enrobés, sous forme de parallélépipèdes de dimensions 7x7x60 mm, pour caractérisation. On utilise comme composition élastomérique d'enrobage une composition d'élastomère(s) diénique(s) conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère); le module E10 de la composition élastomérique d'enrobage est de 10 MPa environ. Le test est réalisé sur 6 cm de longueur de câble, enrobé donc par sa composition élastomérique (ou composition élastomérique d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de composition élastomérique pleine, c'est-à-dire sans câble. Le débit d'air moyen mesuré (moyenne sur les 10 éprouvettes) est d'autant plus faible que l'imperméabilité longitudinale du câble est élevée. Le câble T0 est identifié avec une mesure relative «=». Un câble plus perméable que le câble T0 et donc moins pénétrable est identifié avec une mesure relative «-» et un câble encore plus perméable que le câble T0 et donc peu pénétrable est identifié avec une mesure relative «- -». A l'inverse, un câble moins perméable que le câble T0 et donc plus pénétrable est identifié avec une mesure relative «+» et un câble encore moins perméable que le câble T0 et donc très pénétrable est identifié avec une mesure relative «+ +». Le résultat de ce test est donné dans la ligne intitulée « APA ». L'ensemble des résultats des tests comparatifs sont rassemblés dans le tableau 1 ci-dessous.

**Tableau 1**

| **Câble** | **T0** | **T1** | **T2** | **T3** | **T4** | **T5** | **T6** | **I1** | **I2** |
|---|---|---|---|---|---|---|---|---|---|
| **N/M/P** | 4/3/8 | 4/3/8 | 4/3/8 | 4/3/8 | 4/3/8 | 4/3/8 | 4/3/8 | 4/3/8 | 4/3/8 |
| **D1/D2 (mm)** | 0,35 /0,35 | 0,35/ 0,35 | 0,35/ 0,35 | 0,35/ 0,35 | 0,35/ 0,35 | 0,35/ 0,35 | 0,35/ 0,35 | 0,35/ 0,35 | 0,35/ 0,35 |
| **p10/ p20 (mm)** | 10/20 | 10/20 | 10/20 | 10/20 | 10/20 | 10/20 | 10/20 | 10/20 | 10/20 |
| **p1/p2/ p3 (mm)** | 6,7/10/ 20 | 6,7/10/ 20 | 6,3/9,2 /17 | 6,7/10/ 20 | 6,7/10/ 20 | 7/10,7/ 23 | 7/10,7/ 23 | 6,3/9,2 /17 | 6,4/9,5 /18 |
| α/β/γ(°) | 20,3/ 10,7/ 19,1 | 20,3/ 10,7/ 19,1 | 23,7/ 11,4/ 20,6 | 20,3/ 10,7/ 19,1 | 20,3/ 10,7/ 19,1 | 18,9/ 10,3/ 17,9 | 18,9/ 10,3/ 17,9 | 23,7/ 11,4/ 20,6 | 23,2/ 11,2/ 20 |
| **Aération** | Non | Oui | Non | Non | Oui | Non | Oui | Non | Oui |
| **C (%)** | 0,80 | 0,80 | 0,80 | 0,86 | 0,86 | 0,86 | 0,86 | 0,86 | 0,86 |
| **Rm (MPa)** | 2765 | 2765 | 2765 | 2960 | 2960 | 2960 | 2960 | 2960 | 2960 |
| **D (mm)** | 3,83 | 3.97 | 3.78 | 3.95 | 4.04 | 4.14 | 4.09 | 3.87 | 3.89 |
| **APA** | = | + | = | + | ++ | + | ++ | + | ++ |

| **Câble nu** | | | | | | | | | |
|---|---|---|---|---|---|---|---|---|---|
| **As (%)** | 2,54 | 2,70 | 2,79 | 2,92 | 2,9 | 2,67 | 2,63 | 3,31 | 3,20 |
| **MC** | 129 | 129 | 114 | 129 | 129 | 137 | 137 | 114 | 117 |
| **Fr (N)** | 9538 | 9432 | 9185 | 9927 | 9726 | 10158 | 10032 | 9241 | 9835 |
| **Ar(%)** | 6,33 | 6,99 | 7,32 | 6,30 | 6,30 | 5,90 | 5,90 | 6,95 | 6,99 |
| **Er (N.%)** | 60376 | 65930 | 67234 | 62540 | 61274 | 59932 | 59189 | 64225 | 68747 |
| **Er/D** | 15764 | 16607 | 17787 | 15849 | 15174 | 14466 | 14486 | 16578 | 17673 |

| **Câble extrait** | | | | | | | | | |
|---|---|---|---|---|---|---|---|---|---|
| **As' (%)** | 0,70 | 0,80 | 0,90 | 0,98 | 0,97 | 0,75 | 0,81 | 1,21 | 1,20 |
| **MC' (GPa)** | 88 | 80 | 75 | 81 | 82 | 93 | 93 | 70 | 74 |
| **Fr' (N)** | 9165 | 9092 | 8703 | 9350 | 9298 | 9735 | 9674 | 9108 | 9133 |
| **Ar' (%)** | 3,26 | 3,62 | 3,69 | 3,70 | 3,70 | 3,30 | 3,30 | 4,31 | 3,96 |
| **Er' (N.%)** | 29878 | 32913 | 32114 | 34595 | 34403 | 32126 | 31924 | 39255 | 36167 |
| **Er'/D** | 7801 | 8290 | 8496 | 8767 | 8520 | 7754 | 7813 | 10133 | 9297 |

On notera que l'utilisation d'un pas p3 relativement court dans les câbles I1 et I2, permet d'une part, d'augmenter l'As des câbles par rapport aux câbles témoins. Une telle augmentation permet, comme expliqué précédemment, d'augmenter l'allongement à rupture Ar et donc l'indicateur d'énergie à rupture du câble tout en permettant une absorption des déformations imposées par les obstacles. D'autre part, un pas p3 relativement court permet d'obtenir un module relativement modéré et donc de prolonger la partie élastique de le courbe force-allongement et comme expliqué précédemment, d'augmenter l'allongement à rupture Ar et donc l'indicateur d'énergie à rupture Er du câble tout en permettant une absorption des déformations imposées par les obstacles.

On remarquera en comparant les câbles T0 et T3, mais également les câbles T2 et I1 que, l'utilisation de fils métalliques dont la résistance mécanique est relativement élevée (2960 MPa) en remplacement de fils métalliques dont la résistance mécanique est plus faible (2765 MPa) n'entraine pas, pour les câbles nus, la hausse de l'indicateur d'énergie à rupture correspondante à l'augmentation de résistance mécanique. Dans le cas des câbles T2 et I1, on observe même une stagnation de cet indicateur d'énergie à rupture. Les inventeurs expliquent cela par le fait que les fils métalliques et les torons, au sein du câble nu, sont au contact les uns des autres et que, pour un procédé de fabrication des fils métalliques donné, plus la résistance mécanique est élevée, plus les fils métalliques sont sensibles aux efforts de contacts, ce qui réduit l'allongement à rupture Ar et/ou la force à rupture Fr du câble malgré l'augmentation de la résistance mécanique de chaque fil métallique. Néanmoins, une fois le câble rempli par la composition polymérique, le matériau de remplissage, ici la matrice polymérique, empêche les contacts entre les fils métalliques et les torons, ce qui permet, de par l'utilisation de fils métalliques dont la résistance mécanique est relativement élevée (2960 MPa), d'augmenter l'indicateur d'énergie à rupture Er' du câble par une augmentation de l'allongement à rupture Ar' et/ou de la force à rupture Fr'.

On notera enfin que la mise en oeuvre d'un procédé comprenant une étape d'aération permet, toutes choses étant égales par ailleurs, d'améliorer significativement la pénétrabilité du câble par une composition polymérique, ici par une composition élastomérique.

L'invention ne se limite pas aux modes de réalisation précédemment décrits.

En effet, on pourra également exploiter un câble dans lequel au moins 50%, de préférence au moins 60% et plus préférentiellement au moins 70% présente un taux de carbone C tel que C>0,80%, de préférence C≥0,82% et tel que C≤1,10%, de préférence C≤1,00% et plus préférentiellement C≤0,90% sans sortir du cadre de l'invention.

De façon analogue, on pourra exploiter un câble dans lequel la résistance mécanique d'au moins 50%, de préférence d'au moins 60%, plus préférentiellement d'au moins 70% des fils métalliques de diamètre D1 et D2, mesurée selon la norme ASTM D2969-04, est supérieure ou égale à 3500-2000 x D1 et préférentiellement supérieure ou égale à 3600-2000 x D1 pour un fil métallique de diamètre D1 et supérieure ou égale à 3500-2000 x D2 et préférentiellement supérieure ou égale à 3600-2000 x D2 pour un fil métallique de diamètre D2 sans sortir du cadre de l'invention.

En effet, il suffit qu'un nombre suffisant de fils métalliques de l'assemblage présente une résistance mécanique suffisamment élevée pour permettre d'atteindre les propriétés recherchées, notamment les propriétés d'énergie à rupture.

## Revendications

1. Câble (60) présentant une structure 1xN comprenant une unique couche (61) de N torons (62) enroulés en hélice, chaque toron (62) étant à deux couches de fils métalliques (F1, F2) et comprenant :
- une couche interne (C1) constituée de M≥1 fil(s) métallique(s) interne(s) (F1) de diamètre D1,
- une couche externe (C2) constituée de P>1 fils métalliques externes (F2) de diamètre D2 enroulés autour de la couche interne (C1),
**caractérisé en ce que**
- le câble (60) présente un allongement structural As déterminé en appliquant la norme ASTM D2969-04 de 2014 tel que As ≥ 3,00 %,
- le câble (60) vérifie MC ≤ 127 avec MC= 200 x cos⁴(α) x [M x (D1 / 2)² x cos⁴(β) + P x (D2 / 2)² x cos⁴(γ)] / [M x (D1 / 2)² + P x (D2 / 2)²] avec:
- D1 et D2 étant exprimés en mm,
- α l'angle d'hélice de chaque toron (62) dans le câble (60),
- β l'angle d'hélice de chaque fil métallique interne (F1) dans la couche interne (C1), et
- γ l'angle d'hélice de chaque fil métallique externe (F2) dans la couche externe (C2),
- la résistance mécanique d'au moins 50% des fils métalliques (F1, F2) de diamètre D1 et D2, mesurée selon la norme ASTM D2969-04, est supérieure ou égale à 3500-2000 x D1 pour un fil métallique de diamètre D1 et supérieure ou égale à 3500-2000 x D2 pour un fil métallique de diamètre D2.

2. Câble (60) selon la revendication précédente, présentant une force à rupture Fr telle que Fr ≥ 8500 N, de préférence Fr ≥ 9000 N, plus préférentiellement Fr ≥ 9350 N et encore plus préférentiellement Fr ≥ 9600 N

3. Câble (60) selon l'une quelconque des revendications précédentes, présentant un allongement à rupture Ar tel que Ar ≥ 6,50 %, de préférence Ar ≥ 6,75 % et plus préférentiellement Ar ≥ 6,90 %.

4. Câble (60) selon l'une quelconque des revendications précédentes, présentant un indicateur d'énergie à rupture Er égale au produit de la force à rupture du câble, exprimée en N, et de l'allongement à rupture du câble, exprimé en %, telle que Er ≥ 60000 N.%, de préférence Er ≥ 63000 N.% et plus préférentiellement Er ≥ 64000 N.%.

5. Câble (60) selon l'une quelconque des revendications précédentes, présentant :
- un indicateur d'énergie à rupture Er égale au produit de la force à rupture du câble, exprimée en N, et de l'allongement à rupture du câble, exprimé en %, et
- un diamètre D exprimé en mm
tels que Er/D ≥ 15000, de préférence Er/D ≥ 15800, plus préférentiellement Er/D ≥ 16000 et très préférentiellement Er/D ≥ 16500.

6. Câble extrait (60') d'une matrice polymérique, le câble extrait (60') présentant une structure 1xN comprenant une unique couche (61) de N torons (62) enroulés en hélice, chaque toron (62) étant à deux couches de fils métalliques (F1, F2) et comprenant :
- une couche interne (C1) constituée de M≥1 fil(s) métallique(s) interne(s) (F1) de diamètre D1,
- une couche externe (C2) constituée de P>1 fils métalliques externes (F2) de diamètre D2 enroulés autour de la couche interne (C1),
**caractérisé en ce que**
- le câble extrait (60') présente un allongement structural As' déterminé en appliquant la norme ASTM D2969-04 de 2014 tel que As' ≥ 1,00 %,
- le câble extrait (60') présente un module élastique MC' ≤ 80 GPa,
- la résistance mécanique d'au moins 50% des fils métalliques (F1, F2) de diamètre D1 et D2, mesurée selon la norme ASTM D2969-04, est supérieure ou égale à 3500-2000 x D1 pour un fil métallique de diamètre D1 et supérieure ou égale à 3500-2000 x D2 pour un fil métallique de diamètre D2, dans lequel le câble extrait est obtenu par le procédé tel que décrit dans la description.

7. Câble extrait (60') selon la revendication 6, présentant une force à rupture Fr' telle que Fr' ≥ 8500 N, de préférence Fr' ≥ 9000 N.

8. Câble extrait (60') selon la revendication 6 ou 7, présentant un allongement à rupture Ar' tel que Ar' ≥ 3,70 %, de préférence Ar' ≥ 3,80 % et plus préférentiellement Ar' ≥ 3,90 %.

9. Câble extrait (60') selon l'une quelconque des revendications 6 à 8, présentant un indicateur d'énergie à rupture Er' égale au produit de la force à rupture du câble extrait, exprimée en N, et de l'allongement à rupture du câble extrait, exprimé en %, telle que Er' ≥ 33000 N.%, de préférence Er' ≥ 35000 N.% et plus préférentiellement Er' ≥ 36000 N.%.

10. Câble extrait (60') selon l'une quelconque des revendications 6 à 9, présentant :
- un indicateur d'énergie à rupture Er' égale au produit de la force à rupture du câble extrait, exprimée en N, et de l'allongement à rupture du câble extrait, exprimé en %, et
- un diamètre D exprimé en mm
tels que Er'/D ≥ 8500, de préférence Er'/D ≥ 8800, plus préférentiellement Er'/D ≥ 9000 et très préférentiellement Er'/D ≥ 9100.

11. Câble (60, 60') selon l'une quelconque des revendications précédentes, dans lequel la résistance mécanique d'au moins 50% des fils métalliques (F1, F2) de diamètre D1 et D2, mesurée selon la norme ASTM D2969-04, est supérieure ou égale à 3600-2000 x D1 pour un fil métallique de diamètre D1 et supérieure ou égale à 3600-2000 x D2 pour un fil métallique de diamètre D2.

12. Pneumatique (10) pour véhicule de génie civil, **caractérisé en ce qu'**il comprend au moins un élément filaire de renfort (43, 45, 53, 55) :
- formé, après extraction du pneumatique (10), par un câble extrait (60') selon l'une quelconque des revendications 6 à 11 et/ou
- obtenu par noyage d'un câble (60) selon l'une quelconque des revendications 1 à 5 dans une matrice polymérique.

## Patentansprüche

1. Seil (60), das eine 1xN-Struktur aufweist, die eine einzige Lage (61) aus N Litzen (62) beinhaltet, die schraubenförmig umeinander gewickelt sind, wobei jede Litze (62) zwei Lagen aus Metalldrähten (F1, F2) aufweist und Folgendes beinhaltet:
- eine Innenlage (C1), die aus M≥1 inneren Metalldraht/-drähten (F1) mit einem Durchmesser D1 besteht,
- eine Außenlage (C2), die aus P>1 äußeren Metalldrähten (F2) mit einem Durchmesser D2, die um die Innenlage (C1) gewickelt sind, besteht,
**dadurch gekennzeichnet, dass**
- das Seil (60) eine strukturelle Dehnung As, die durch Anwendung der Norm ASTM D2969-04 von 2014 bestimmt wird, aufweist, die derart ist, dass As ≥ 3,00 % ist,
- das Seil (60) MC ≤ 127 erfüllt, mit MC= 200 x cos⁴(α) x [M x (D1 / 2)² x cos⁴(β)+ P x (D2 / 2)² x cos⁴(γ) ] / [M x (D1 / 2)² + P x (D2 / 2)²], wobei:
- D1 und D2 in mm ausgedrückt sind,
- α der Steigungswinkel jeder Litze (62) in dem Seil (60) ist,
- β der Steigungswinkel jedes inneren Metalldrahts (F1) in der Innenlage (C1) ist und
- γ der Steigungswinkel jedes äußeren Metalldrahts (F2) in der Außenlage (C2) ist,
- die mechanische Festigkeit von mindestens 50 % der Metalldrähte (F1, F2) mit dem Durchmesser D1 und D2, gemessen gemäß der Norm ASTM D2969-04, größer als oder gleich 3500-2000 x D1 für einen Metalldraht mit dem Durchmesser D1 und größer als oder gleich 3500-2000 x D2 für einen Metalldraht mit dem Durchmesser D2 ist.

2. Seil (60) nach dem vorhergehenden Anspruch, das eine Bruchkraft Fr aufweist, die derart ist, dass Fr ≥ 8500 N, vorzugsweise Fr ≥ 9000 N, noch bevorzugter Fr ≥ 9350 N und sogar noch bevorzugter Fr ≥ 9600 N ist.

3. Seil (60) nach einem beliebigen der vorhergehenden Ansprüche, das eine Bruchdehnung Ar aufweist, die derart ist, dass Ar ≥ 6,50 %, vorzugsweise Ar ≥ 6,75 % und noch bevorzugter Ar ≥ 6,90 % ist.

4. Seil (60) nach einem beliebigen der vorhergehenden Ansprüche, das einen Bruchenergieindikator Er aufweist, der gleich dem Produkt aus der Bruchkraft des Seils, ausgedrückt in N, und der Bruchdehnung des Seils, ausgedrückt in %, ist und derart ist, dass Er ≥ 60000 N.%, vorzugsweise Er ≥ 63000 N.% und noch bevorzugter Er ≥ 64000 N.% ist.

5. Seil (60) nach einem beliebigen der vorhergehenden Ansprüche, das Folgendes aufweist:
- einen Bruchenergieindikator Er, der gleich dem Produkt aus der Bruchkraft des Seils, ausgedrückt in N, und der Bruchdehnung des Seils, ausgedrückt in %, ist, und
- einen Durchmesser D, ausgedrückt in mm,
die derart sind, dass Er/D ≥ 15000, vorzugsweise Er/D ≥ 15800, noch bevorzugter Er/D ≥ 16000 und sehr bevorzugt Er/D ≥ 16500 ist.

6. Seil (60'), das aus einer Polymermatrix extrahiert ist, wobei das extrahierte Seil (60') eine 1xN-Struktur aufweist, die eine einzige Lage (61) aus N Litzen (62) beinhaltet, die schraubenförmig umeinander gewickelt sind, wobei jede Litze (62) zwei Lagen aus Metalldrähten (F1, F2) aufweist und Folgendes beinhaltet:
- eine Innenlage (C1), die aus M≥1 inneren Metalldraht/-drähten (F1) mit einem Durchmesser D1 besteht,
- eine Außenlage (C2), die aus P>1 äußeren Metalldrähten (F2) mit einem Durchmesser D2, die um die Innenlage (C1) gewickelt sind, besteht,
**dadurch gekennzeichnet, dass**
- das extrahierte Seil (60') eine strukturelle Dehnung As', die durch Anwendung der Norm ASTM D2969-04 von 2014 bestimmt wird, aufweist, die derart ist, dass As' ≥ 1,00 %, ist,
- das extrahierte Seil (60') einen Elastizitätsmodul MC' ≤ 80 GPa aufweist,
- die mechanische Festigkeit von mindestens 50 % der Metalldrähte (F1, F2) mit dem Durchmesser D1 und D2, gemessen gemäß der Norm ASTM D2969-04, größer als oder gleich 3500-2000 x D1 für einen Metalldraht mit dem Durchmesser D1 und größer als oder gleich 3500-2000 x D2 für einen Metalldraht mit dem Durchmesser D2 ist, wobei das extrahierte Seil durch das Verfahren erhalten wird, wie es in der Beschreibung beschrieben ist.

7. Extrahiertes Seil (60') nach Anspruch 6, das eine Bruchkraft Fr' aufweist, die derart ist, dass Fr' ≥ 8500 N, vorzugsweise Fr' ≥ 9000 N ist.

8. Extrahiertes Seil (60') nach Anspruch 6 oder 7,das eine Bruchdehnung Ar' aufweist, die derart ist, dass Ar' ≥ 3,70 %, vorzugsweise Ar' ≥ 3,80 % und noch bevorzugter Ar' ≥ 3,90 % ist.

9. Extrahiertes Seil (60') nach einem beliebigen der Ansprüche 6 bis 8, das einen Bruchenergieindikator Er' aufweist, der gleich dem Produkt aus der Bruchkraft des extrahierten Seils, ausgedrückt in N, und der Bruchdehnung des extrahierten Seils, ausgedrückt in %, ist und derart ist, dass Er' ≥ 33000 N.%, vorzugsweise Er' ≥ 35000 N.% und noch bevorzugter Er' ≥ 36000 N.% ist.

10. Extrahiertes Seil (60') nach einem beliebigen der Ansprüche 6 bis 9, das Folgendes aufweist:
- einen Bruchenergieindikator Er', der gleich dem Produkt aus der Bruchkraft des extrahierten Seils, ausgedrückt in N, und der Bruchdehnung des extrahierten Seils, ausgedrückt in %, ist,
- einen Durchmesser D, ausgedrückt in mm,
die derart sind, dass Er'/D ≥ 8500, vorzugsweise Er'/D ≥ 8800, noch bevorzugter Er'/D ≥ 9000 und sehr bevorzugt Er'/D ≥ 9100 ist.

11. Seil (60, 60') nach einem beliebigen der vorhergehenden Ansprüche, wobei die mechanische Festigkeit von mindestens 50 % der Metalldrähte (F1, F2) mit dem Durchmesser D1 und D2, gemessen gemäß der Norm ASTM D2969-04, größer als oder gleich 3600-2000 x D1 für einen Metalldraht mit dem Durchmesser D1 und größer als oder gleich 3600-2000 x D2 für einen Metalldraht mit dem Durchmesser D2 ist.

12. Reifen (10) für ein Baufahrzeug, **dadurch gekennzeichnet, dass** er mindestens ein Verstärkungselement aus Draht (43, 45, 53, 55) beinhaltet:
- das, nach einer Extraktion aus dem Reifen (10), durch ein extrahiertes Seil (60') nach einem beliebigen der Ansprüche 6 bis 11 gebildet wird und/oder
- das durch das Eintauchen eines Seils (60) nach einem beliebigen der Ansprüche 1 bis 5 in eine Polymermatrix erhalten wird.

## Claims

1. Cord (60) exhibiting a 1xN structure comprising a single layer (61) of N strands (62) wound in a helix, each strand (62) having two layers of metal threads (F1, F2) and comprising:
- an internal layer (C1) made up of M≥1 internal metal thread(s) (F1) of diameter D1,
- an external layer (C2) made up of P>1 external metal threads (F2) of diameter D2 wound around the internal layer (C1),
**characterized in that**
- the cord (60) exhibits a structural elongation As determined by applying the standard ASTM D2969-04 of 2014 such that As ≥ 3.00%,
- the cord (60) satisfies MC ≤ 127, where MC= 200 x cos⁴(α) x [M x (D1 / 2)² x cos⁴(β) + P x (D2 / 2)² x cos⁴(γ)] / [M x (D1 / 2)² + P x (D2 / 2)²], where:
- D1 and D2 are expressed in mm,
- α is the helix angle of each strand (62) in the cord (60),
- β is the helix angle of each internal metal thread (F1) in the internal layer (C1),
and
- γ is the helix angle of each external metal thread (F2) in the external layer (C2),
- the mechanical strength of at least 50% of the metal threads (F1, F2) of diameter D1 and D2, measured according to the standard ASTM D2969-04, is greater than or equal to 3500-2000 x D1 for a metal thread of diameter D1 and greater than or equal to 3500-2000 x D2 for a metal thread of diameter D2.

2. Cord (60) according to the preceding claim, which exhibits a force at break Fr such that Fr ≥ 8500 N, preferably Fr ≥ 9000 N, more preferably Fr ≥ 9350 N and even more preferably Fr ≥ 9600 N.

3. Cord (60) according to either one of the preceding claims, which exhibits an elongation at breakAr such thatAr ≥ 6.50%, preferably ≥ 6.75% and more preferably Ar ≥ 6.90%.

4. Cord (60) according to any one of the preceding claims, which exhibits an energy-at-break indicator Er equal to the product of the force at break of the cord, expressed in N, and the elongation at break of the cord, expressed in %, such that Er ≥ 60 000 N.%, preferably Er ≥ 63 000 N.% and more preferably Er ≥ 64 000 N.%.

5. Cord (60) according to any one of the preceding claims, which exhibits:
- an energy-at-break indicator Er equal to the product of the force at break of the cord, expressed in N, and the elongation at break of the cord, expressed in %, and
- a diameter D expressed in mm,
such that Er/D ≥ 15 000, preferably Er/D ≥ 15 800, more preferably Er/D ≥ 16 000 and very preferably Er/D ≥ 16 500.

6. Cord (60') extracted from a polymer matrix, the extracted cord (60') exhibiting a 1xN structure comprising a single layer (61) of N strands (62) wound in a helix, each strand (62) having two layers of metal threads (F1, F2) and comprising:
- an internal layer (C1) made up of M≥1 internal metal thread(s) (F1) of diameter D1,
- an external layer (C2) made up of P>1 external metal threads (F2) of diameter D2 wound around the internal layer (C1),
**characterized in that**
- the extracted cord (60') exhibits a structural elongation As' determined by applying the standard ASTM D2969-04 of 2014 such that As' ≥ 1.00%,
- the extracted cord (60') exhibits an elastic modulus MC' ≤ 80 GPa,
- the mechanical strength of at least 50% of the metal threads (F1, F2) of diameter D1 and D2, measured according to the standard ASTM D2969-04, is greater than or equal to 3500-2000 x D1 for a metal thread of diameter D1 and greater than or equal to 3500-2000 x D2 for a metal thread of diameter D2, wherein the extracted cord is obtained by the process as described in the description.

7. Extracted cord (60') according to Claim 6, which exhibits a force at break Fr' such that Fr' ≥ 8500 N, preferably Fr' ≥ 9000 N.

8. Extracted cord (60') according to Claim 6 or 7, which exhibits an elongation at breakAr' such thatAr' ≥ 3.70%, preferably Ar' ≥ 3.80% and more preferably Ar' ≥ 3.90%.

9. Extracted cord (60') according to any one of Claims 6 to 8, which exhibits an energy-at-break indicator Er' equal to the product of the force at break of the extracted cord, expressed in N, and the elongation at break of the extracted cord, expressed in %, such that Er' ≥ 33000 N.%, preferably Er' ≥ 35 000 N.% and more preferably Er' ≥ 36000 N.%.

10. Extracted cord (60') according to any one of Claims 6 to 9, which exhibits:
- an energy-at-break indicator Er' equal to the product of the force at break of the extracted cord, expressed in N, and the elongation at break of the extracted cord, expressed in %, and
- a diameter D expressed in mm,
such that Er'/D ≥ 8500, preferably Er'/D ≥ 8800, more preferably Er'/D ≥ 9000 and very preferably Er'/D ≥ 9100.

11. Cord (60, 60') according to any one of the preceding claims, wherein the mechanical strength of at least 50% of the metal threads (F1, F2) of diameter D1 and D2, measured according to the standard ASTM D2969-04, is greater than or equal to 3600-2000 x D1 for a metal thread of diameter D1 and greater than or equal to 3600-2000 x D2 for a metal thread of diameter D2.

12. Tyre (10) for a construction plant vehicle, **characterized in that** it comprises at least one filamentary reinforcing element (43, 45, 53, 55):
- formed, after extraction from the tyre (10), by an extracted cord (60') according to any one of Claims 6 to 14, and/or
- obtained by embedding a cord (60) according to any one of Claims 1 to 5 or according to any one of Claims 11 to 14 in a polymer matrix.
